# EUROPEAN PATENT SPECIFICATION

(11) **EP 1 866 725 B1**
(45) Date of publication and mention of the grant of the patent: **20.10.2010**
(21) Application number: 06727631.1
(22) Date of filing: 21.02.2006
(51) Int. Cl.: G06F 1/00

(54) **NETWORK ATTACK DETECTION**
ERKENNUNG VON NETZWERKANGRIFFEN
DETECTION D'ATTAQUES SUR UN RESEAU

(30) Priority: 24.03.2005 EP 05006462
(43) Date of publication of application: 19.12.2007
(73) Proprietor: International Business Machines Corporation, Armonk, New York 10504 (US)
(72) Inventor: RISSMANN, Rüdiger, CH- 8134 Adliswil (CH); DUPONCHEL, Yann, CH-8802 Kilchberg (CH); ZAMBONI, Diego, M., CH-8134 Adliswil (CH); RIORDAN, James, F., CH-8803 Rüschlikon (CH)
(74) Representative: Klett, Peter Michael
(86) International application number: PCT/IB2006/050554
(87) International publication number: WO 2006/100613

(56) References cited:
- EP-A- 1 330 095
- WO-A-2004/107706
- WO-A-2005/015370
- US-A- 2004 172 557

## Description

This invention relates to the field of detecting network attacks and particularly relates to detecting attacks on a data communication network locally to the attack originating user system.

The Internet is a wide area data communication network formed from a plurality of interconnected data networks. In operation, the Internet facilitates data communication between a range of remotely situated data processing systems. Typically, end user data processing systems connected to the Internet are referred to as client data processing systems or simply clients. Similarly, data processing systems hosting web sites and services for access by end users via the Internet are referred to as server data processing systems or simply servers. There is a client-server relationship completed via the Internet between the end user data processing systems and the hosting data processing systems.

The Internet has become an important communication network for facilitating electronically effected commercial interactions between consumers, retailers, and service providers. Access to the Internet is typically provided to such entities via an Internet Service Provider (ISP). Each ISP typically operates an open network to which clients subscribe. Each client is provided with a unique Internet Protocol (IP) address on the network. Similarly, each server on the network is provided with a unique IP address. The network operated by the ISP is connected to the Internet via a dedicated data processing system usually referred to as a router. In operation, the router directs inbound communication traffic from the Internet to specified IP addresses on the network. Similarly, the router directs outbound communication traffic from the network in the direction of specified IP addresses on the Internet.

A problem faced by many people and businesses is the increasing frequency of electronic attacks to the networks they use. Such attacks include computer virus attacks and so-called "worm" attacks. Attacks of this nature introduce significant performance degradation in networks. Infected systems connected to the network typically attempt to spread the infection within the network. Many users do not recognize that their systems are infected. A known intrusion detection sensor spoofs service interaction with potential attackers. The sensor functions by spoofing the existence of machines and services at otherwise unused IP addresses. As the addresses are otherwise unused, all traffic destined to them is *a priori* suspicious. The sensor spoofs services to determine the intention behind the traffic. The sensor itself offers a virtualization infrastructure that allows individual sensors to be written as if they were running on a single host.

WO 2004/107706 discloses an intrusion detection sensor (IDS) for detecting attacks on a data communication network. The IDS identifies data traffic on the network originating at any assigned address and addressed to any unassigned address, inspects the data traffic so identified for data indicative of an attack and generates an alert signal, if required.

The term "unassigned" is used in this context as covering an address that is not assigned to a physical device other than an apparatus for detecting an intrusion or generating an attack signature. The apparatus that is designed to execute the method disclosed in WO 2004/107706 is the device those "unassigned" addresses are actually assigned to in order to make use of the method. Those addresses are insofar unassigned as they are not assigned to any device that does have another functionality apart from signature generation or intrusion detection.

In the above mentioned IDS, a block of unassigned addresses is designated to the IDS such that the IDS can spoof a response to any data traffic to these unassigned addresses. Also, the IDS may be geographically remote from the originating user system of the data traffic making it difficult to take action against the originating user system.

WO 2005/015370 A1 describes a system for detecting unauthorized use of a network that is provided with a pattern matching engine for searching attack signatures into data packets, and with a response analysis engine for detecting response signatures into data packets sent back from an attacked network/computer. When a suspect signature has been detected into a packet, the system enters an alarm status starting a monitoring process on the packets sent back from the potentially attacked network/computer.

EP 1 330 095 A1 describes a method for monitoring the flow of a data stream traveling between a client and a server system in order to identify at least one response descriptor in the data stream. The identified response descriptors are stored in a set of available states for said client. Then the data stream traveling from the client to the server is analyzed in order to identify at least one request descriptor. The request descriptors identified are compared with the set of available states for said client, and in response to the comparing step, a monitoring result is generated.

It is an aim of the present invention to provide a system for detecting attacks to unused or inaccessible addresses. It is a further aim to provide local reporting of local problems. In addition the detection can be realized transparent to the attacking entity.

According to a first aspect of the present invention there is provided a method for detecting attacks on a data communication network, the method comprising: monitoring return messages addressed to an originating user system; identifying a return message of a specified nature, wherein the specified nature of the return message is selected to indicate that a destination address is inaccessible; and temporarily routing subsequent messages from the originating user system to an intrusion detection sensor. The monitoring means also referred to as message checker works as a filter that checks if the return message has the specific property. If the return message is recognized to have the property the message checker is looking for, the return message is subjected to rerouting. The message checker can hence be seen as a return message type operated switch. The message checker can at the same time check for different specific properties, and perform the rerouting if one or more of those properties are found to be present.

Preferably, the intrusion detection sensor is local to the originating user system, i.e. the intrusion detection sensor is connected to the same network as the originating system. The term network is herein understood as an aggregation of networkable units, the border of the network being represented by border routers or edge routers. Those routers handle the connectivity to other networks. A network can be a subnetwork to a larger network. The intrusion detection sensor may spoof an exchange with the originating user system. In this way, an intrusion detection sensor local to an originating user system of a message sent to an inaccessible address can determine the nature of the originating user system's intent. In other words, the invention allows a detection and reporting of an attack closer to the attacking entity.

The return message may relate to a message sent by the originating user system to a destination address and the step of temporarily routing may reroute to the intrusion detection sensor all subsequent messages that are directed from the originating user system to the destination address.

For example, the specified nature of the return message may be an Internet Control Message Protocol message indicating a failed connection.

The temporarily routing may be applied for a predetermined period of time, after which normal routing is resumed. The method may also include triggering the temporarily routing if the number of return messages of a specified nature that have been identified as addressed to an originating user system, exceeds a predetermined threshold. This threshold would then be usable to differentiate between harmless traffic and harmful traffic such as spam.

According to a second aspect of the present invention there is provided an apparatus for detecting attacks on a data communication network, the apparatus comprising: a router including a mechanism for monitoring return messages addressed to an originating user system local to the router; and an intrusion detection sensor; wherein the mechanism including: a message tracker for identifying a return message of a specified nature, wherein the specified nature of the return message indicates that a destination address is inaccessible; and means for temporarily routing subsequent messages from the originating user system to the intrusion detection sensor.

Preferably, the intrusion detection sensor is local to the router. The intrusion detection sensor may include means for spoofing an exchange with the originating user system. The intrusion detection sensor may include a virtualization infrastructure with a plurality of virtual sensors each spoofing a service.

According to a third aspect of the present invention there is provided a data communication system comprising: a plurality of data processing systems in a network; a router local to the data processing systems for routing messages to and from the data processing systems; the router including a mechanism for monitoring return messages addressed to an originating user system in the form of one of the data processing systems local to the router; and an intrusion detection sensor; wherein the mechanism includes: means for identifying a return message of a specified nature; wherein the specified nature of the return message indicates that a destination address is inaccessible; and means for temporarily routing subsequent messages from the originating user system to the intrusion detection sensor.

According to a fourth aspect of the present invention there is provided a computer program element comprising computer program code means which, when loaded in a processor of a data processing system, configures the processor to perform a method comprising the steps of: monitoring return messages addressed to an originating user system; identifying a return message of a specified nature, wherein the specified nature of the return message indicates that a destination address is inaccessible; and temporarily routing subsequent messages from the originating user system to an intrusion detection sensor.

When a process from an originating user system tries to contact an unused or inaccessible address (for example, behind a firewall), an ICMP (Internet Control Message Protocol) message is returned to the router local to the originating user system telling the originating user system that the destination is not reachable along with some details as to why. This message is intercepted by the router local to the originating user system and all traffic from the originating user system is temporarily routed through the IDS.

Embodiments of the present invention will now be described, by way of examples only, with reference to the accompanying drawings in which:
Figure 1 is a block diagram of a data processing system as known in the prior art;
Figure 2 is a block diagram of a data processing network showing an embodiment of a known intrusion detection sensor;
Figure 3 is a block diagram of known intrusion detection sensor;
Figure 4 is a block diagram of a data processing network in accordance with the present invention;
Figure 5 is a detail of the data processing network of Figure 4 showing re-routing of messages in accordance with the present invention; and
Figure 6 is a flow diagram of the method or re-routing in accordance with the present invention.

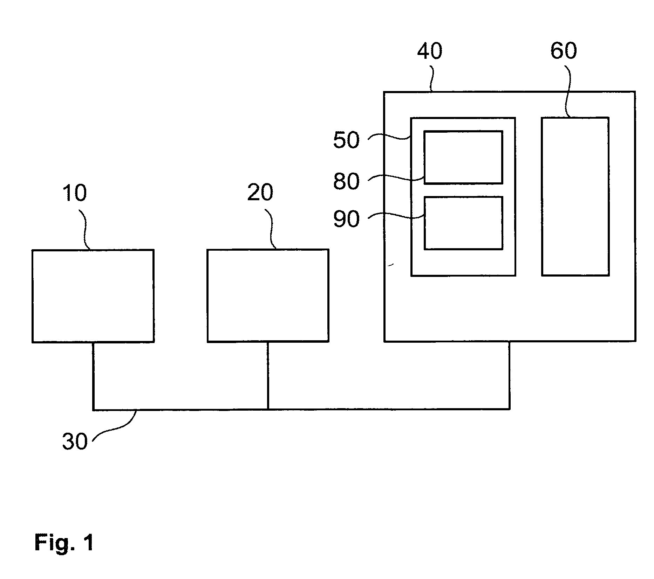

Referring first to Figure 1, a data processing system comprises a central processing unit (CPU) 10, an input/output (I/O) subsystem 20, and a memory subsystem 40, all interconnected by a bus subsystem 30. The memory subsystem 40 may comprise random access memory (RAM), read only memory (ROM), and one or more data storage devices such as hard disk drives, optical disk drives, and the like. The I/O subsystem 20 may comprise: a display; a printer; a keyboard; a pointing device such as a mouse, trackball, or the like; and one or more network connections permitting communication between the data processing system and one or more similar systems and/or peripheral devices via a data communication network. The combination of such systems and devices interconnected by such a network may itself form a distributed data processing system. Such distributed systems may be themselves interconnected by additional data communication networks.

In the memory subsystem 40 is stored data 60 and computer program code 50 executable by the CPU 10. The program code 50 includes operating system software 90 and application software 80. The operating system software 90, when executed by the CPU 10, provides a platform on which the application software 80 can be executed.

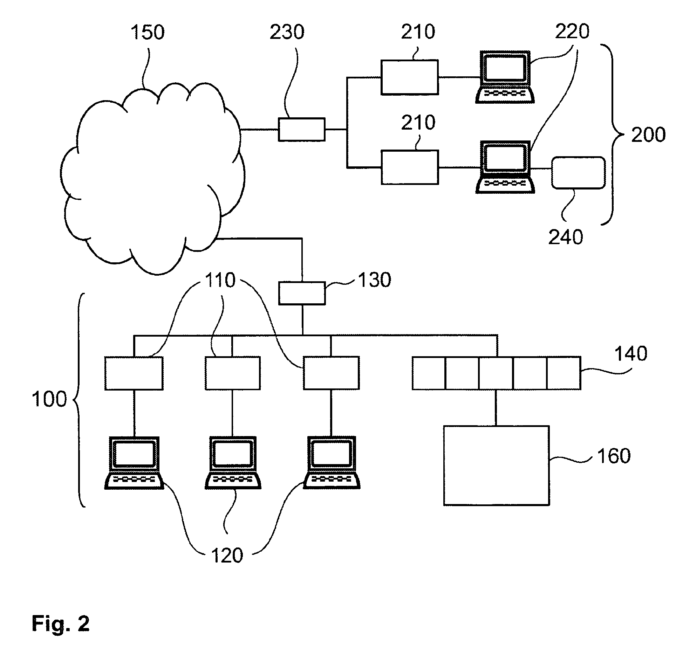

Referring now to Figure 2, an example extract of an Internet architecture is shown with an embodiment of an intrusion detection sensor (IDS). In the example architecture two data communication networks 100, 200 are shown. It will be appreciated that this is an example architecture and many different forms of data communication networks may be provided.

Figure 2 shows a first data communication network 100 with a plurality of addresses 110 for assignment to data processing systems 120 in the first network 100 and a second data communication network 200 having a plurality of addresses 210 for assignment to data processing systems 220 in the second network 200. The networks 100, 200 may be in the form of Internet service installations having a plurality of assignable Internet Protocol (IP) addresses 110, 210. The networks 100, 200 are each connected to the Internet 150 via a router 130, 230.

The routers 130, 230 may be implemented in the form of a data processing system as herein before described with reference to Figure 1 dedicated by appropriate programming to the task to route communication traffic in the form of data packets between the Internet 150 and the network 100, 200 to which the router 130, 230 is connected based on IP address data specified in the data packets.

In the first data communication network 100, there are IP addresses 110 assigned to systems 120 belonging to users of the Internet service. Each system 120 may be a data processing system as herein before described with reference to Figure 1. A second group 140 of the IP addresses on the network 100 are free. More specifically, the second group 140 of IP addresses are not assigned to user systems. An intrusion detection sensor (IDS) 160 is connected to the network 100. The IDS 160 is also connected to the router 130.

A process 240, such as a worm or other attack, may originate from a user system 220 on the second data communication network 200. The process 240 may be addressed to a wide selection of addresses on other networks 100. If the process 240 is addressed to an unassigned address such as one of the second group 140 of IP addresses on the first network 100 which are unassigned to user systems, the process 240 is routed to the IDS 160 which spoofs replies to the process 240 and raises an alarm.

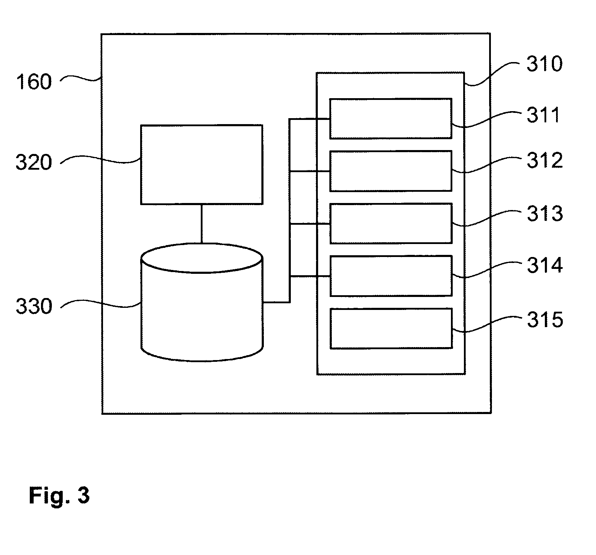

An example internal architecture of an IDS 160 is shown in more detail in Figure 3. Other forms of IDS are known and may be used in the present invention. The IDS 160 operates by spoofing the existence of machines and services at otherwise unused IP addresses. Because the IP addresses are otherwise unused, all traffic destined to these addresses is *a priori* suspicious. The IDS 160 spoofs services, rather than merely recording attempted connections, to determine the intention behind the traffic.

The IDS 160 is built on top of a security-hardened machine that offers no real services beyond restricted login. The IDS 160 offers a virtualization infrastructure 310 that allows individual sensors 311-315 to be operated as if they were running on a single host. It also provides a logging infrastructure 320 based on a relational database 330 that allows correlation and analysis of the copious data produced by the number of virtual sensors 311-315. The services offered by the virtual sensors 311-315 may include Hypertext Transfer Protocol (HTTP), Microsoft's Distributed Component Object Model, Structured Query Language, and Windows file sharing and printing (SMB).

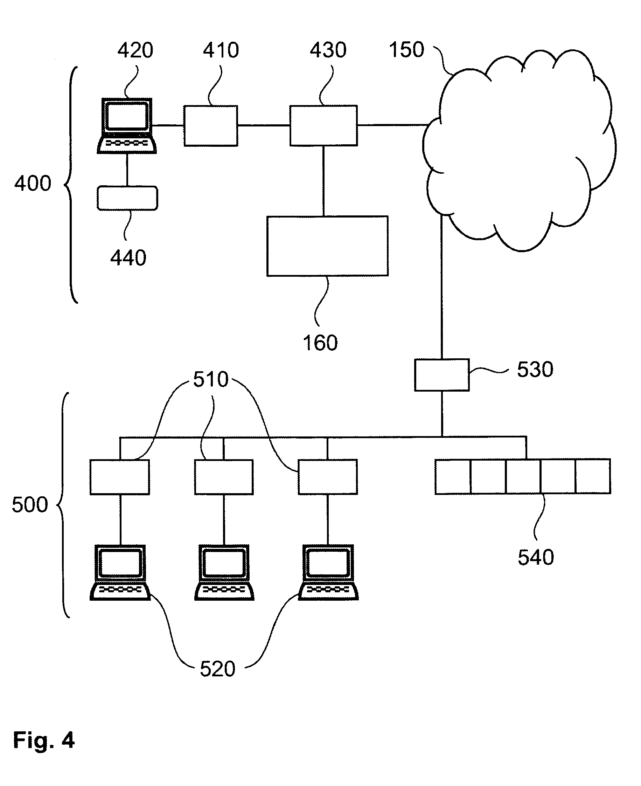

With reference to Figure 4, in an example embodiment of the present invention, there is provided a first data communication network 400 with a user system 420 with an IP address 410 from which originates a process 440 such as a malicious worm process. The process 440 may be addressed to a range of IP addresses 510 of user systems 520 across other networks, for example the second network 500 shown in Figure 4.

The process 440 may be addressed to IP addresses 540 which are unused or inaccessible, for example, behind a firewall. If this is the case, an ICMP (Internet Control Message Protocol) message is returned from the router 530 local to the inaccessible address which in this example is the router 530 of the second network 500. The ICMP message is addressed to the originating user system 420 of the process 440 indicating that the destination is not reachable, together with some details as to why.

A mechanism is provided to capture the ICMP message at the router 430 local to the originating user system 420. The ICMP message tells the router 430 local to the originating user system 420 that all traffic from the originating user system 420 to the destination should be given to or routed through a local intrusion detection sensor (IDS) 160. The local IDS 160 can then interact with the originating user system 420 to determine the root cause of the attempted connection.

Each network 400, 500 has its router 430, 530 which manages the traffic across the Internet 150. The routers open the IP packets of data to read the destination address, calculate the best route, and then send the packet toward its final destination. If the destination is on the same network as the sending computer, the router sends the packet directly to the destination computer. If the packet is going to a destination outside the local network, the router instead sends the packet to another router closer to the destination. That router in turn sends the packet to a closer router until the packet reaches its final destination.

The routers 430, 530 have two or more physical ports: input ports and output ports. When an input port receives a packet, a software routine called a routing process is run. This process looks inside the header information in the IP packet and finds the address to which the data is being sent. It then compares this address against an internal database, called a routing table, which has detailed information about the ports to which packets with various IP addresses should be sent. Based on what it finds in the router table, the router sends the packet to a specific output port which sends the data to the next router or to the destination itself.

The operation of the Internet is monitored by the routers and when a connection cannot be completed, the event is reported by the ICMP (Internet Control Message Protocol). Various different types of ICMP messages are defined and each message type is encapsulated in an IP packet. For example, a "Destination Unreachable" message is used when the subnet or a router cannot locate the host destination, and a "Network Unreachable" message is used when the network of the destination cannot be located.

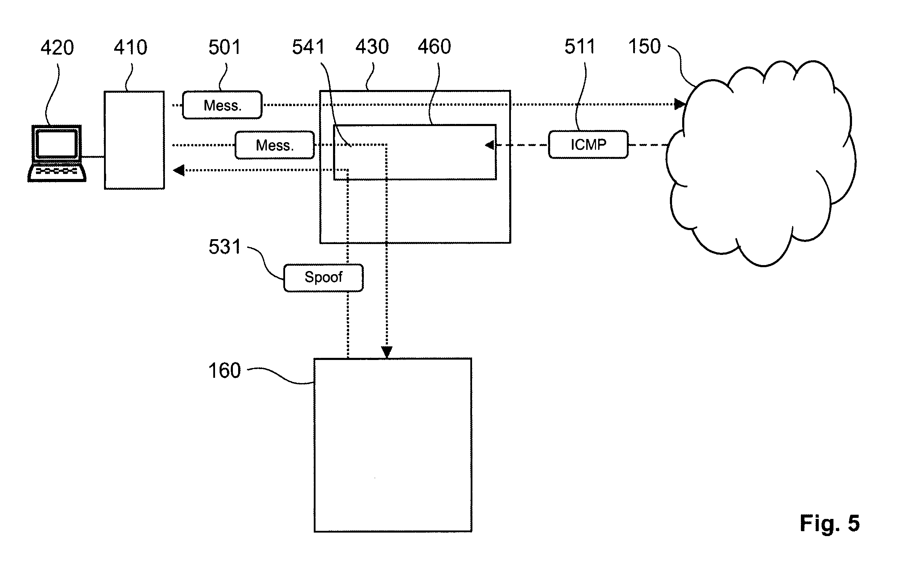

Referring to Figure 5, in an example embodiment of the present invention, a rerouting mechanism 460, also referred to as rerouter, in the router 430 identifies the nature of messages being returned to the IP addresses 410 local to the router 430. An originating user system 420 with an originating IP address 410 sends a message 501 to a destination address. If a return message 511 is identified by the mechanism 460 as being an ICMP message indicating an unreachable destination, the mechanism 460 sets up a temporary route 541 to direct traffic addressed to the unreachable destination from the originating IP address 410 to an IDS 160 local to the router 430. The mechanism 460 can herefor comprise a message checker that is able to analyze the nature of the intercepted return message 511 and identify those that are of a specified nature. This identification works like a filter that does not affect the return messages that are not of the specified nature. The other messages 511 are re-routed by a rerouter to the IDS 160. The rerouter need not be a separate hardware device. It can be a functionality of the router 430 that reroutes the return messages 511 in accordance with a policy. The router 430 can run one or more policies to determine the nature of redirection and re-routing. For example, the redirection may only take place if the number of return messages 511 of the monitored type exceeds a predetermined threshold. The temporary route 541 may be timed to last for a predetermined period of time, for example 30 seconds.

In response to the message 501 an ICMP message 511 is returned by a remote router in the Internet 150 to the router 430 local to the originating user system 420. The mechanism 460 intercepts the ICMP message 511. Since the return message 511 is identified to be of a specified nature, namely here indicating an unreachable destination, the mechanism 460 will perform a rerouting so that all traffic from the originating user system 420 to the destination is given to or routed through the local IDS 160. The mechanism 460 sets up a temporary route 541 so that any subsequent messages sent from the originating IP address 410 to the inaccessible address are re-routed to the IDS 160. The IDS 160 can spoof an exchange 531 with the originating user system 420 by pretending to be the inaccessible address. The IDS 160 can then determine the nature of the attempted contact by the originating user system 420 to the inaccessible address and, if the attempted contact is malicious an alarm can be raised locally within the same router network.

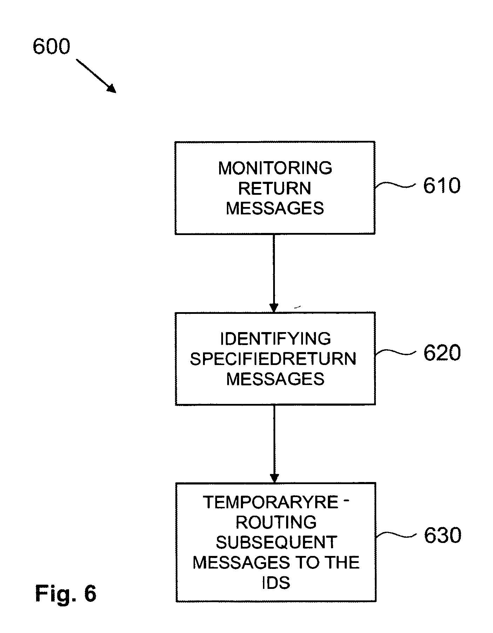

Figure 6 shows a flow diagram of the process 600 of the mechanism 460 at the router 430. The process 600 involves the mechanism 460 monitoring 610 return messages 511 addressed to an originating user system, identifying 620 a return message 511 of a specified nature and temporarily routing 630 subsequent messages from the originating user system 420 to the intrusion detection sensor 160. The IDS 160 can be a sensor as described herein before, spoofing replies to the originating user system 420.

In addition to all the advantages of a conventional IDS, this mechanism more precisely delivers alarms more locally hence reducing the need for a redistribution architecture. This directly addresses the problem of efficiently detecting infected machines in the local network, which is valuable information for the local network administrators, instead of detecting remote infected systems, about which the local network administrator can do nothing. So the invention allows a detection of an intrusion closer to the intruder, thereby allowing a network administrator who is in charge of the domain that includes the intruder to react to the intrusion by an appropriate action. The closer the intrusion detection is located to the intruder the better the administrator is able to perform such action.

Another advantage is that every unused or inaccessible address in existence across different networks will result in a returned ICMP message 511. Therefore, unused addresses do not need to be assigned to an IDS. The mechanism relies on the returned ICMP messages 511 indicating that the destination address is inaccessible.

The present invention is typically implemented as a computer program product, comprising a set of program instructions for controlling a computer or similar device. These instructions can be supplied preloaded into a system or recorded on a storage medium such as a CD-ROM, or made available for downloading over a network such as the Internet or a mobile telephone network.

The invention can also be realized by a servicing entity offering a service to a serviced entity, also referred to as client system. This service can be one or more of the following: Installation of the device or system according to the invention in or for an environment of the serviced entity, deployment of the infrastructure usable to perform thereon, in particular deployment or integration of computing infrastructure, comprising integrating computer-readable code into a computing system, wherein the code in combination with the computing system is capable of performing the method according to the invention. In the context of this invention, the servicing entity can equip a client system against intrusion from an originating user system. Thereby the servicing entity can either provide efficient detection of infected machines in the serviced entity's network or detect infected machines that attack the serviced entitie's network. The equipment method can comprise the steps of: connecting an intrusion detection sensor 160 to a router 430, providing the router 430 with a capability to monitor 610 return messages 511 addressed to an originating user system 420, identify 620 a return message 511 of a specified nature, and temporarily route 630 subsequent messages from the same originating user system 420 to said intrusion detection sensor 160. The IDS 160 can be equipment owned or leased by the servicing entity. In particular, the servicing entity could use this IDS 160 for several serviced entities at the same time, hence sharing this resource. This has the advantage that an update performed on the IDS 160 with respect to intrusion detectability performance, has its impact on all connected serviced entities. Another advantage is that this service can be realized transparent to the serviced entity.

Improvements and modifications can be made to the foregoing without departing from the scope of the present invention.

## Claims

1. A method for detecting attacks on a data communication network, the method comprising:
- monitoring (610) return messages (511) addressed to an originating user system (420);
- identifying (620) a return message (511) of a specified nature, wherein the specified nature of the return message (511) is selected to indicate that a destination address is inaccessible; and
- temporarily routing (630) subsequent messages from the same originating user system (420) to an intrusion detection sensor (160),
wherein the intrusion detection sensor (160) is selected to be arranged local to the originating user system (420).

2. A method as claimed in claim 1, further comprising the intrusion detection sensor (160) spoofing an exchange with the originating user system (420).

3. A method as claimed in any one of claims 1 to 2, wherein the return message (511) relates to a message (501) sent by the originating user system (420) to a destination address and the step of temporarily routing (630) is applied to all subsequent messages from the originating user system (420) to the destination address.

4. A method as claimed in any one of the preceding claims, wherein the specified nature of the return message (511) is selected to comprise an Internet Control Message Protocol message indicating a failed connection.

5. A method as claimed in any one of the preceding claims; wherein the temporarily routing (630) is applied for a predetermined period of time.

6. A method as claimed in any one of the preceding claims, further comprising triggering the temporarily routing (630) if a number of return messages (511) of a specified nature have been identified as being addressed to an originating user system (420), said number exceeding a predetermined threshold.

7. An apparatus for detecting attacks on a data communication network, the apparatus comprising:
- a router (430) including a mechanism (460) for monitoring return messages (511) addressed to an originating user system (420) local to the router (430); and
- an intrusion detection sensor (160);
wherein the mechanism (460) includes:
- a message checker for identifying a return message (511) of a specified nature, wherein the specified nature of the return message (511) indicates that a destination address is inaccessible; and
- a rerouter for temporarily routing subsequent messages from the originating
user system (420) to the intrusion detection sensor (160),
wherein the intrusion detection sensor (160) is local to the router (430).

8. An apparatus as claimed in claim 7, wherein the intrusion detection sensor (160) is designed to spoof an exchange with the originating user system (420).

9. An apparatus as claimed in claim 8, wherein the intrusion detection sensor (160) includes a virtualization infrastructure with a plurality of virtual sensors (310-315) each spoofing a service.

10. An apparatus as claimed in any one of claims 7 to 9, wherein the return message (511) relates to a message (500) sent by the originating user system (420) to a destination address and the rerouter is operative on all subsequent messages from the originating user system (420) to the destination address.

11. An apparatus as claimed in any one of claims 7 to 10, wherein the specified nature of the return message (511) is an Internet Control Message Protocol message indicating a failed connection.

12. An apparatus as claimed in any one of claims 7 to 11, wherein the rerouter is active for a predetermined period of time.

13. An apparatus as claimed in any one of claims 7 to 12, wherein the rerouter includes a determinator for determining whether a number of return messages (510) of a specified nature that have been identified addressed to an originating user system (420) exceeds a predetermined threshold.

14. A data communication system comprising:
- a plurality of data processing systems in a network;
- a router (430) local to the data processing systems for routing messages to and from the data processing systems;
the router (430) including a mechanism (460) for monitoring return messages (511) addressed to an originating user system (420) in the form of one of the data processing systems local to the router (430);
- an intrusion detection sensor (160) local to the router (430);
wherein the mechanism (460) includes:
a message checker for identifying a return message (510) of a specified nature, wherein the specified nature of the return message (511) indicates that a destination address is inaccessible; and
a rerouter for temporarily routing subsequent messages from the originating user system (420) to the intrusion detection sensor (160).

15. A computer program element comprising computer program code means which, when loaded in a processor of a data processing system, configures the processor to perform a method comprising the steps of:
monitoring (610) return messages (511) addressed to an originating user system (420);
identifying (620) a return message (510) of a specified nature, wherein the specified nature of the return message (511) indicates that a destination address is inaccessible; and
temporarily routing (630) by means of a router (430) subsequent messages from the originating user system (420) to an intrusion detection sensor (160) local to the router (430) and the originating user system (420).

16. A computer program element as claimed in claim 15, wherein the return message (511) relates to a message (501) sent by the originating user system (420) to a destination address and the step of temporarily routing is performed for all subsequent messages from the originating user system (420) to the destination address.

17. A computer program element as claimed in claims 15 or 16, wherein the specified nature of the return message (511) is an Internet Control Message Protocol message indicating a failed connection.

18. A computer program element as claimed in any one of claims 15 to 17, wherein the temporarily routing (630) is for a predetermined period of time.

19. A computer program element as claimed in any one of claims 15 to 18, wherein the method includes triggering the temporarily routing (630) if the number of return messages (511) of a specified nature that have been identified as addressed to an originating user system (420) exceeds a predetermined threshold.

## Patentansprüche

1. Verfahren für das Erkennen von Angriffen auf ein Datenübertragungsnetzwerk, wobei das Verfahren Folgendes umfasst:
- Überwachen (610) von Rückgabenachrichten (511), die an ein Ausgangsbenutzersystem (420) gerichtet sind;
- Erkennen (620) einer Rückgabenachricht (511) einer festgelegten Art, wobei die festgelegte Art der Rückgabenachricht (511) ausgewählt ist um anzugeben, dass ein Zugriff auf eine Zieladresse nicht möglich ist; und
- vorübergehendes Weiterleiten (630) nachfolgender Nachrichten von demselben Ausgangsbenutzersystem (420) an einen Angriffserkennungssensor (160),
wobei der Angriffserkennungssensor (160) so ausgewählt ist, dass er lokal zu dem Ausgangsbenutzersystem (420) angeordnet ist.

2. Verfahren nach Anspruch 1, das weiter umfasst, dass der Angriffserkennungssensor (160) einen Austausch mit dem Ausgangsbenutzersystem (420) vortäuscht.

3. Verfahren nach einem beliebigen der Ansprüche 1 oder 2, wobei sich die Rückgabenachricht (511) auf eine Nachricht (501) bezieht, die von dem Ausgangsbenutzersystem (420) an eine Zieladresse gesendet wurde, und wobei der Schritt des vorübergehenden Weiterleitens (630) auf alle nachfolgenden Nachrichten von dem Ausgangsbenutzersystem (420) an die Zieladresse angewendet wird.

4. Verfahren nach einem beliebigen der vorangegangenen Ansprüche, wobei die festgelegte Art der Rückgabenachricht (511) so ausgewählt ist, dass sie eine ICMP-Nachricht (Internet Control Message Protocol) umfasst, die eine fehlgeschlagene Verbindung angibt.

5. Verfahren nach einem beliebigen der vorangegangenen Ansprüche, wobei das vorübergehende Weiterleiten (630) für eine vorgegebene Zeitdauer angewendet wird.

6. Verfahren nach einem beliebigen der vorangegangenen Ansprüche, das des Weiteren das Auslösen des vorübergehenden Weiterleitens (630) umfasst, wenn von einer Anzahl von Rückgabenachrichten (511) einer festgelegten Art ermittelt wurde, dass sie an ein Ausgangsbenutzersystem (420) gerichtet waren, wobei die Anzahl einen vorgegebenen Schwellenwert überschreitet.

7. Vorrichtung für das Erkennen von Angriffen auf ein Datenübertragungsnetzwerk, wobei die Vorrichtung Folgendes umfasst:
- einen Router (430), der einen Mechanismus für das Überwachen von Rückgabenachrichten (511) beinhaltet, die an ein Ausgangsbenutzersystem (420) gerichtet sind, das lokal zu dem Router (430) angeordnet ist; und
- einen Angriffserkennungssensor (160);
wobei der Mechanismus (460) Folgendes beinhaltet:
- eine Nachrichtenüberprüfungseinheit, um eine Rückgabenachricht (511) einer festgelegten Art zu erkennen, wobei die festgelegte Art der Rückgabenachricht (511) angibt, dass der Zugriff auf eine Zieladresse nicht möglich ist; und
- eine Umleitungseinheit für das vorübergehende Weiterleiten nachfolgender Nachrichten von dem Ausgangsbenutzersystem (420) an den Angriffserkennungssensor (160),
wobei der Angriffserkennungssensor (160) lokal zu dem Router (430) angeordnet ist.

8. Vorrichtung nach Anspruch 7, wobei der
Angriffserkennungssensor (160) so ausgelegt ist, dass er einen Austausch mit dem Ausgangsbenutzersystem (420) vortäuscht.

9. Vorrichtung nach Anspruch 8, wobei der
Angriffserkennungssensor (160) eine Virtualisierungsinfrastruktur mit einer Vielzahl von virtuellen Sensoren (310 bis 315) beinhaltet, die jeweils einen Dienst vortäuschen.

10. Vorrichtung nach einem beliebigen der Ansprüche 7 bis 9, wobei sich die Rückgabenachricht (511) auf eine Nachricht (500) bezieht, die von dem Ausgangsbenutzersystem (420) an eine Zieladresse gesendet wurde, und wobei die Umleitungseinheit für alle nachfolgenden Nachrichten von dem Ausgangsbenutzersystem (420) an die Zieladresse wirksam wird.

11. Vorrichtung nach einem beliebigen der Ansprüche 7 bis 10, wobei die festgelegte Art der Rückgabenachricht (511) eine ICMP-Nachricht ist, die eine fehlgeschlagene Verbindung angibt.

12. Vorrichtung nach einem beliebigen der Ansprüche 7 bis 11, wobei die Umleitungseinheit für eine vorgegebene Zeitdauer aktiv ist.

13. Vorrichtung nach einem beliebigen der Ansprüche 7 bis 12, wobei die Umleitungseinheit eine Feststellungseinheit beinhaltet um festzustellen, ob eine Anzahl von Rückgabenachrichten (510) einer festgelegten Art, von denen ermittelt wurde, dass sie an ein Ausgangsbenutzersystem (420) gerichtet waren, einen vorgegebenen Schwellenwert überschreitet.

14. Datenübertragungssystem, das Folgendes umfasst:
- eine Vielzahl von Datenverarbeitungssystemen in einem Netzwerk;
- einen Router (430), der lokal zu den Datenverarbeitungssystemen angeordnet ist, um Nachrichten an die und von den Datenverarbeitungssystemen weiterzuleiten;
wobei der Router (430) einen Mechanismus (460) für das Überwachen von Rückgabenachrichten (511), die an ein Ausgangsbenutzersystem (420) gerichtet sind, in Form eines der Datenverarbeitungssysteme beinhaltet, die lokal zu dem Router (430) angeordnet sind;
- einen Angriffserkennungssensor (160), der lokal zu dem Router (430) angeordnet ist;
wobei der Mechanismus (460) Folgendes beinhaltet:
eine Nachrichtenüberprüfungseinheit, um eine Rückgabenachricht (510) einer festgelegten Art zu erkennen, wobei die festgelegte Art der Rückgabenachricht (511) angibt, dass der Zugriff auf eine Zieladresse nicht möglich ist; und
eine Umleitungseinheit, um nachfolgende Nachrichten vorübergehend von dem Ausgangsbenutzersystem (420) an den Angriffserkennungssensor (160) weiterzuleiten.

15. Computerprogrammelement, das ein
Computerprogrammcodemittel umfasst, welches, wenn es in einen Prozessor eines Datenverarbeitungssystems geladen wird, den Prozessor so konfiguriert, dass er ein Verfahren ausführt, welches die folgenden Schritte umfasst:
Überwachen (610) von Rückgabenachrichten (511), die an ein Ausgangsbenutzersystem (420) gerichtet sind;
Erkennen (620) einer Rückgabenachricht (510) einer festgelegten Art, wobei die festgelegte Art der Rückgabenachricht (511) angibt, dass der Zugriff auf eine Zieladresse nicht möglich ist; und
mittels eines Routers (430) vorübergehendes Weiterleiten (630) nachfolgender Nachrichten von dem Ausgangsbenutzersystem (420) an einen Angriffserkennungssensor (160), der lokal zu dem Router (430) und dem Ausgangsbenutzersystem (420) angeordnet ist.

16. Computerprogrammelement nach Anspruch 15, wobei sich die Rückgabenachricht (511) auf eine Nachricht (501) bezieht, die von dem Ausgangsbenutzersystem (420) an eine Zieladresse gesendet wurde, und wobei der Schritt des vorübergehenden Weiterleitens für alle nachfolgenden Nachrichten von dem Ausgangsbenutzersystem (420) an die Zieladresse durchgeführt wird.

17. Computerprogrammelement nach Anspruch 15 oder 16, wobei die festgelegte Art der Rückgabenachricht (511) eine ICMP-Nachricht ist, die eine fehlgeschlagene Verbindung angibt.

18. Computerprogrammelement nach einem beliebigen der Ansprüche 15 bis 17, wobei das vorübergehende Weiterleiten (630) für eine vorgegebene Zeitdauer stattfindet.

19. Computerprogrammelement nach einem beliebigen der Ansprüche 15 bis 18, wobei das Verfahren das Auslösen des vorübergehenden Weiterleitens (630) beinhaltet, wenn die Anzahl von Rückgabenachrichten (511) einer festgelegten Art, von denen ermittelt wurde, dass sie an ein Ausgangsbenutzersystem (420) gerichtet waren, einen vorgegebenen Schwellenwert überschreitet.

## Revendications

1. Procédé de détection d'attaques sur un réseau de communication de données, le procédé comprenant les étapes consistant à :
- surveiller (610) des messages de retours (511) adressés à un système utilisateur émetteur (420),
- identifier (620) un message de retour (511) d'une nature spécifiée, où la nature spécifiée du message de retour (511) est sélectionnée pour indiquer qu'une adresse de destination est inaccessible, et
- router temporairement (630) des messages suivants provenant du même système utilisateur émetteur (420) vers un capteur de détection d'intrusion (160),
dans lequel le capteur de détection d'intrusion (160) est sélectionné pour être disposé localement par rapport au système utilisateur émetteur (420).

2. Procédé selon la revendication 1, comprenant en outre le capteur de détection d'intrusion (160) espionnant un échange avec le système utilisateur émetteur (420).

3. Procédé selon l'une quelconque des revendications 1 à 2, dans lequel le message de retour (511) se rapporte à un message (501) envoyé par le système utilisateur émetteur (420) à une adresse de destination et l'étape consistant à router temporairement (630) est appliquée à tous les messages suivants allant du système utilisateur émetteur (420) vers l'adresse de destination.

4. Procédé selon l'une quelconque des revendications précédentes, dans lequel la nature spécifiée du message de retour (511) est sélectionnée pour comprendre un message de protocole de message de commande Internet indiquant une connexion échouée.

5. Procédé selon l'une quelconque des revendications précédentes, dans lequel le routage temporaire (630) est appliqué pendant un intervalle de temps prédéterminé.

6. Procédé selon l'une quelconque des revendications précédentes, comprenant en outre le déclenchement du routage temporaire (630) si un certain nombre de messages de retours (511) d'une nature spécifiée ont été identifiés comme étant adressés à un système utilisateur émetteur (420), ledit nombre dépassant un seuil prédéterminé.

7. Appareil destiné à détecter des attaques sur un réseau de communication de données, l'appareil comprenant :
- un routeur (430) incluant un mécanisme (460) pour surveiller des messages de retours (511) adressés à un système utilisateur émetteur (420) local par rapport au routeur (430), et,
- un capteur de détection d'intrusion (160),
dans lequel le mécanisme (460) comprend :
- un contrôleur de message destiné à identifier un message de retour (511) d'une nature spécifiée, où la nature spécifiée du message de retour (511) indique qu'une adresse de destination est inaccessible, et
- un dispositif de réacheminement destiné à router temporairement des messages suivants provenant du système utilisateur émetteur (420) vers le capteur de détection d'intrusion (160),
dans lequel le capteur de détection d'intrusion (160) est local par rapport au routeur (430).

8. Appareil selon la revendication 7, dans lequel le capteur de détection d'intrusion (160) est conçu pour espionner un échange avec le système utilisateur émetteur (420).

9. Appareil selon la revendication 8, dans lequel le capteur de détection d'intrusion (160) comprend une infrastructure de virtualisation comportant une pluralité de capteurs virtuels (310 à 315) espionnant chacun un service.

10. Appareil selon l'une quelconque des revendications 7 à 9, dans lequel le message de retour (511) se rapporte à un message (500) envoyé par le système utilisateur émetteur (420) à une adresse de destination et le dispositif de réacheminement agit sur tous les messages suivants allant du système utilisateur émetteur (420) vers l'adresse de destination.

11. Appareil selon l'une quelconque des revendications 7 à 10, dans lequel la nature spécifiée du message de retour (511) est un message de protocole de message de commande Internet indiquant une connexion échouée.

12. Appareil selon l'une quelconque des revendications 7 à 11, dans lequel le dispositif de réacheminement est actif pendant un intervalle de temps prédéterminé.

13. Appareil selon l'une quelconque des revendications 7 à 12, dans lequel le dispositif de réacheminement comprend un module de détermination destiné à déterminer si un nombre de messages de retours (510) d'une nature spécifiée qui ont été identifiés comme étant adressés à un système utilisateur émetteur (420) dépasse un seuil prédéterminé.

14. Système de communication de données comprenant :
- une pluralité de systèmes de traitement de données dans un réseau,
- un routeur (430) local par rapport aux systèmes de traitement de données destiné à router des messages vers et depuis les systèmes de traitement de données,
le routeur (430) incluant un mécanisme (460) pour surveiller des messages de retours (510) adressés à un système utilisateur émetteur (420) sous la forme de l'un des systèmes de traitement de données locaux par rapport au routeur (430),
- un capteur de détection d'intrusion (160) local par rapport au routeur (430),
dans lequel le mécanisme (460) comprend :
un contrôleur de message destiné à identifier un message de retour (510) d'une nature spécifiée, où la nature spécifiée du message de retour (511) indique qu'une adresse de destination est inaccessible, et
un dispositif de réacheminement destiné à router temporairement des messages suivants provenant du système utilisateur émetteur (420) vers le capteur de détection d'intrusion (160).

15. Elément de programme informatique comprenant un moyen de code de programme qui, lorsqu'il est chargé dans un processeur d'un système de traitement de données, configure le processeur pour exécuter un procédé comprenant les étapes consistant à :
surveiller (610) des messages de retours (511) adressés à un système utilisateur émetteur (420),
identifier (620) un message de retour (510) d'une nature spécifiée, où la nature spécifiée du message de retour (511) indique qu'une adresse de destination est inaccessible, et
router temporairement (630) au moyen d'un routeur (430) des messages suivants provenant du système utilisateur émetteur (420) vers un capteur de détection d'intrusion (160) local par rapport au routeur (430) et au système utilisateur émetteur (420).

16. Elément de programme informatique selon la revendication 15, dans lequel le message de retour (511) se rapporte à un message (501) envoyé par le système utilisateur émetteur (420) à une adresse de destination et l'étape de routage temporaire est exécutée pour tous les messages suivants allant du système utilisateur émetteur (420) vers l'adresse de destination.

17. Elément de programme informatique selon la revendication 15 ou 16, dans lequel la nature spécifiée du message de retour (511) est un message de protocole de message de commande Internet indiquant une connexion échouée.

18. Elément de programme informatique l'une quelconque des revendications 15 à 17, dans lequel le routage temporaire (630) concerne un intervalle de temps prédéterminé.

19. Elément de programme informatique l'une quelconque des revendications 15 à 18, dans lequel le procédé comprend le déclenchement du routage temporaire (630) si le nombre de messages de retours (511) d'une nature spécifiée qui ont été identifiés comme étant adressés à un système utilisateur émetteur (420) dépasse un seuil prédéterminé.
